(19)

**Europäisches Patentamt**
**European Patent Office**
**Office européen des brevets**

(11)　**EP 3 319 015 B1**

(12)　# EUROPEAN PATENT SPECIFICATION

(45) Date of publication and mention
of the grant of the patent:
**23.03.2022　Bulletin 2022/12**

(21) Application number: **17197450.4**

(22) Date of filing: **20.10.2017**

(51) International Patent Classification (IPC):
**G06N 3/04** *(2006.01)*　　**G06N 3/063** *(2006.01)*

(52) Cooperative Patent Classification (CPC):
**G06N 3/0454; G06N 3/063**

(54) **CONVOLUTIONAL NEURAL NETWORK PROCESSING METHOD AND APPARATUS**

VERFAHREN UND VORRICHTUNG ZUR VERARBEITUNG EINES NEURONALEN KONVOLUTIONSNETZWERKS

PROCÉDÉ ET APPAREIL DE TRAITEMENT DE RÉSEAU NEURONAL CONVOLUTIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:　**07.11.2016　KR 20160147562**

(43) Date of publication of application:
**09.05.2018　Bulletin 2018/19**

(73) Proprietor: **Samsung Electronics Co., Ltd.
Gyeonggi-do 16677 (KR)**

(72) Inventors:
• **SON, Jinwoo
Gyeonggi-do 16678 (KR)**
• **SON, Changyong
Gyeonggi-do 16678 (KR)**
• **CHOI, Chang Kyu
Gyeonggi-do 16678 (KR)**
• **HAN, Jaejoon
Gyeonggi-do 16678 (KR)**

(74) Representative: **Grootscholten, Johannes A.M. et al
Arnold & Siedsma
Bezuidenhoutseweg 57
2594 AC The Hague (NL)**

(56) References cited:
• YU-HSIN CHEN ET AL: "Eyeriss: A Spatial Architecture for Energy-Efficient Dataflow for Convolutional Neural Networks", 2016 ACM/IEEE 43RD ANNUAL INTERNATIONAL SYMPOSIUM ON COMPUTER ARCHITECTURE (ISCA), 1 June 2016 (2016-06-01), pages 367-379, XP055381052, DOI: 10.1109/ISCA.2016.40 ISBN: 978-1-4673-8947-1
• PARK HYUNSUN ET AL: "Zero and data reuse-aware fast convolution for deep neural networks on GPU", 2016 INTERNATIONAL CONFERENCE ON HARDWARE/SOFTWARE CODESIGN AND SYSTEM SYNTHESIS (CODES+ISSS), ACM, 2 October 2016 (2016-10-02), pages 1-10, XP033002570, [retrieved on 2016-11-21]
• Sharan Chetlur ET AL: "cuDNN: efficient primitives for deep learning", arXiv:1410.0759v3, 18 October 2014 (2014-10-18), XP055260407, Retrieved from the Internet: URL:http://arxiv.org/abs/1410.0759v3 [retrieved on 2016-03-22]
• CHEN YU-HSIN ET AL: "Eyeriss: An Energy-Efficient Reconfigurable Accelerator for Deep Convolutional Neural Networks", IEEE JOURNAL OF SOLID-STATE CIRCUITS, IEEE SERVICE CENTER, PISCATAWAY, NJ, USA, vol. 52, no. 1, 1 January 2017 (2017-01-01), pages 127-138, XP011638633, ISSN: 0018-9200, DOI: 10.1109/JSSC.2016.2616357 [retrieved on 2017-01-09]

**Description**

The following description relates to convolutional neural network (CNN) processing technology.

Neural network-based deep learning technology is widely used in various fields of art. For example, a deep learning-based biometric recognition and verification application that is used to recognize, for example, a face, an iris, and a voice, may be used in a terminal, for example, a smartphone. A convolutional neural network (CNN) refers to a multilayer neural network to which a convolution operation is applied, and performs effectively in a field of deep learning-based image and voice recognition.

Eyeriss: A Spatial Architecture for Energy-Efficient Dataflow for Convolutional Neural Networks in name of Yu-Hsin Chen et. ale present a dataflow called row-stationary (RS), that minimizes data movement energy consumption on a spatial architecture. This is realized by exploiting local data reuse of filter weights and feature map pixels, i.e., activations, in the high-dimensional convolutions, and minimizing data movement of partial sum accumulations.

An aspect provides convolution neural network (CNN)-based recognition technology that may be implemented in a terminal environment of a limited resource, and show a robust performance in various environments. For example, a method of processing a CNN described herein may be implemented to allow a face recognizer to respond within a limited period of time in a trust zone of a smartphone. The method of processing the CNN may be embodied using only limited computing resources to be operated as a single core. In the CNN in which a matrix multiplication operation is applied to given data, the method of processing the CNN may be used to reduce a data loading number and an operation performing number to reduce use of a memory, and also process the CNN at a high speed.

In one general aspect, a method of processing a CNN includes steps defined in the appended independent method claim.

According to a further aspect of the invention, there is provided a computer program comprising computer-executable instructions to perform the method, when the program is run on a computer, defined in the appended independent method claim.

According to a further aspect of the invention, there is provided a computer device or other hardware device programmed to perform the method defined in the appended independent method claim.

According to another aspect there is provided a data storage device encoding a program in machine-readable and machine-executable form to perform the method defined in the appended independent method claim.

In another general aspect, an apparatus comprising the features defined in the appended independent apparatus claim.

Other features and aspects will be apparent from the following detailed description, the drawings, and the claims.

BRIEF DESCRIPTION OF THE DRAWINGS

FIG. 1 is a flowchart illustrating an example of a method of processing a convolutional neural network (CNN).
FIG. 2 is a diagram illustrating an example of a CNN.
FIG. 3 is a diagram illustrating an example of a convolution operation.
FIG. 4 is a diagram illustrating an example of a first operation mode.
FIG. 5 is a diagram illustrating an example of a second operation mode.
FIG. 6 is a diagram illustrating an example of a process of selecting an operation mode.
FIGS. 7A through 7C are diagrams illustrating an example of a first operation mode.
FIGS. 8A and 8B are diagrams illustrating an example of a second operation mode.
FIG. 9 is a diagram illustrating an example of an apparatus for processing a CNN.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

The terminology used herein is for the purpose of describing particular examples only, and is not to be used to limit the disclosure. As used herein, the terms "a," "an," and "the" are intended to include the plural forms as well, unless the context clearly indicates otherwise. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

Terms such as first, second, A, B, (a), (b), and the like may be used herein to describe components. Each of these terminologies is not used to define an essence, order or sequence of a corresponding component but used merely to distinguish the corresponding component from other component(s). For example, a first component may be referred to a second component, and similarly the second component may also be referred to as the first component.

It should be noted that if it is described in the specification that one component is "connected," "coupled," or "joined" to another component, a third component may be "connected," "coupled," and "joined" between the first and second components, although the first component may be directly connected, coupled or joined to the second component. In addition, it should be noted that if it is described in the specification that one component is "directly connected" or "directly joined" to another component, a third component may not be present therebetween. Likewise, expressions, for example, "between" and "immediately between" and "adjacent to" and "immediately adjacent to" may also be construed as described in the foregoing.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

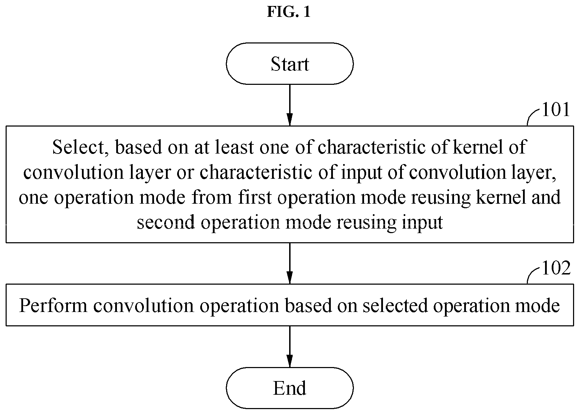

FIG. 1 is a flowchart illustrating an example of a method of processing a convolutional neural network (CNN). Hereinafter, the method of processing a CNN is simply referred to as a CNN processing method.

Referring to FIG. 1, in operation 101, an apparatus for processing a CNN, hereinafter simply referred to as a CNN processing apparatus, selects, based on at least a characteristic of a kernel of a convolution layer and a characteristic of an input of the convolution layer, one operation mode from a first operation mode reusing the kernel and a second operation mode reusing the input. In machine learning, the CNN, which is a type of a neural network, includes a plurality of convolution layers designed to perform a convolution operation. The convolution layer in the CNN may perform a convolution operation associated with the input using the kernel.

The CNN processing apparatus refers to an apparatus configured to process the CNN, and may be embodied as a software module, a hardware module, or a combination thereof. For example, the CNN processing apparatus may generate or process, for example, an operation, a calculation, and an instruction associated with the CNN.

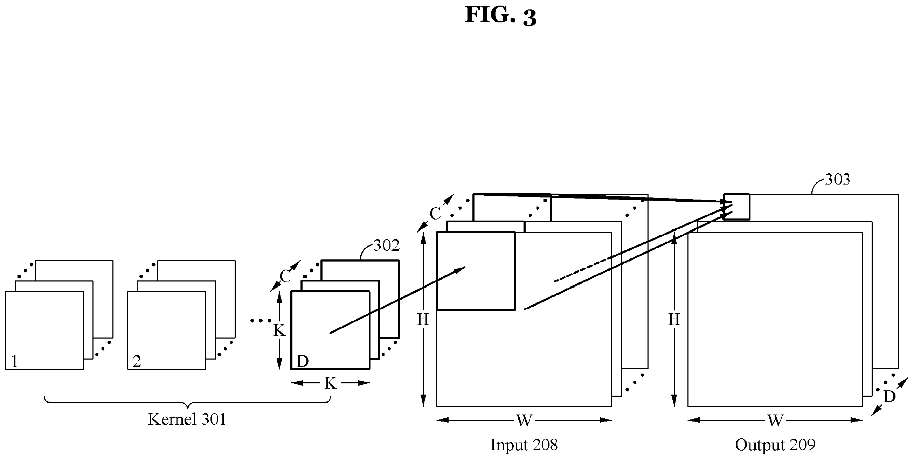

The CNN processing apparatus may adaptively select the operation mode for each of the convolution layers from the first operation mode and the second operation mode. The first operation mode may reuse the kernel of the convolution layer to perform an operation, which is also construed herein as a calculation or a computation. The second operation mode may reuse the input of the convolution layer to perform an operation. The first operation mode will be described with reference to FIGS. 3, 4, 7A, 7B, and 7C, and the second operation mode will be described with reference to FIGS. 3, 5, 8A, and 8B.

The reusing of the kernel or the input indicates performing a convolution operation in the convolution layer, using a loaded kernel or input repetitively. The CNN processing apparatus may load the kernel or the input from a provided database. The database may be embodied as a memory included in the CNN processing apparatus or as an external device, for example, a server, that may be connected to the CNN processing apparatus through a wire or a network, or wirelessly.

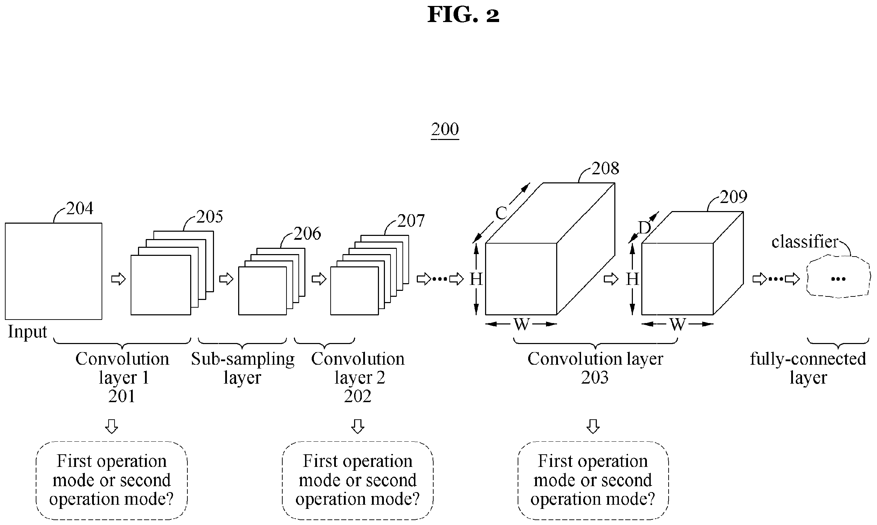

FIG. 2 is a diagram illustrating an example of a CNN. Referring to FIG. 2, a CNN 200 includes a plurality of convolution layers, for example, convolution layer 1 201, convolution layer 2 202, and a convolution layer 203. A CNN processing apparatus selects an operation mode for each of the convolution layers 201, 202, and 203 based on characteristics of kernels of the convolution layers 201, 202, and 203 and characteristics of inputs of the convolution layers 201, 202, and 203, and thus the operation mode to be applied to each of the convolution layers 201, 202, and 203 varies depending on an input and a kernel of a corresponding convolution layer.

An input of a convolution layer is data to be employed as an input to the convolution layer, and includes a feature map, which is an output generated by initial input data or a previous layer. For example, as illustrated in FIG. 2, an input of the convolution layer 1 201 is an initial input 204 to the CNN 200, and an input 206 of the convolution layer 2 202 is an output of a sub-sampling layer. The input 206 of the convolution layer 2 202 is generated by the sub-sampling layer based on an output 205 of the convolution layer 1 201. An input of the convolution layer 203 is a feature map 208 of a size of $W \times H \times C$. The CNN processing apparatus performs a convolution operation on the feature map 208 using a kernel of the convolution layer 203. As a result of the convolution operation of the convolution layer 203, a feature map 209 of a size of $W \times H \times D$ is generated.

A kernel of a convolution layer is employed to perform a convolution operation in the convolution layer, and may include a plurality of three-dimensional (3D) filters. For example, the convolution layer 203 may employ a kernel including D filters as a kernel used to apply the convolution operation to the feature map 208 of the size of W × H × C.

The CNN 200 includes the convolution layers 201, 202, and 203, and the characteristics of the inputs 204, 206, and 208 and the characteristics of the kernels, for example, a size of a feature map, and a number and a size of filters, of the convolution layers 201, 202, and 203 may differ. For example, the convolution layer 1 201 among the convolution layers 201, 202, and 203 may have a smallest depth, and the convolution layer 203 among the convolution layers 201, 202, and 203 may have a greatest depth. In such an example, a characteristic of a kernel of a convolution layer and a characteristic of an input of the convolution layer may be determined based on a depth of the convolution layer in the CNN 200.

The CNN processing apparatus adaptively selects the operation mode for each of the convolution layers 201, 202, and 203 based on the kernels and inputs 204, 206, and 208 of the convolution layers 201, 202, and 203. Thus, the CNN processing apparatus reduces a number of times of loading data needed for a convolution operation, which is herein referred to as a data loading number, and a number of times of performing an operation, for example, a multiply-accumulate (MAC) operation, which is herein referred to as an operation performing number, and thus reduce use of a memory and enable high-speed CNN processing.

Referring back to FIG. 1, in operation 102, the CNN processing apparatus performs the convolution operation based on the selected operation mode. The CNN processing apparatus performs the convolution operation of the convolution layer based on the operation mode selected from the first operation mode and the second operation mode.

Hereinafter, an example of a convolution operation will be described with reference to FIGS. 3 through 5 with an example of the input 208 and the output 209 of the convolution layer 203 illustrated in FIG. 2.

FIG. 3 is a diagram illustrating an example of a convolution operation.

Referring to FIG. 3, the CNN processing apparatus selects an operation mode corresponding to the convolution layer 203 based on a characteristic of a kernel 301 and a characteristic of the input 208. The kernel 301 is employed to perform a convolution operation in the convolution layer 203, and includes D filters. A size of each filter is K × K × C, and a size of the kernel 301 is K × K × C × D.

A size of the input 208 is W × H × C, and the input 208 includes C pieces of data of which a size of each piece is W × H. The input 208 may be a feature map to which padding is applied. The padding refers to a method of filling a portion of an input with a certain value. The portion may be generally an edge, but examples of the portion are not limited thereto. Applying of padding to an input using a pad of a size of 1 refers to filling a certain value, for example, 0, in an edge of each frame of a feature map, and zero padding refers to applying the padding by setting the value to be 0. For example, when the zero padding using a pad of a size of 1 is applied to an input of a size of X × Y × Z, an edge of the input to which the padding is applied may be data of which an edge is 0 and a size is (X + 1) × (Y + 1) × Z.

When the operation mode is selected, the CNN processing apparatus performs filtering on the input 208 using the D filters, and generates the output 209 from a filtering result corresponding to each of the D filters. Referring to FIG. 3, the filtering is performed on the input 208 by each filter of a size of K × K × C, and thus a number of filtering results of which a size of each filtering result is W × H may be D, and the output 209 of a size of W × H × D may be generated from the D filtering results.

The output 209 may include the D filtering results generated by D channels. For example, the filtering may be performed on the input 208 of the size of W × H × C by a D-th filter 302 of the size of K × K × C, and a filtering result 303 of the size of W × H may be generated. The D-th filter 302 may include C weight maps, and a size of each of the weight maps may be K × K. The CNN processing apparatus may slide, to a stride, each weight map of the size of K × K in each frame of a size of W × H included in the input 208, and generate the filtering result 303 obtained from the D-th filter 302 and the input 208. The stride refers to an interval of sliding a weight map in a convolution operation.

In general, in a case of performing a convolution operation at a stride of 1 using the kernel 301 of the size of K × K × C × D and the input 208 of the size of W × H × D, each filter of the kernel 301 may be slid by W × H times, and thus the kernel 301 may need to be loaded repeatedly by W × H times. Thus, data of the kernel 301 may be loaded by a total of K × K × C × D × W × H times because the data of the kernel 301 of the size of K × K × C × D may be loaded repeatedly by W × H times. In addition, data of the input 208 may need to be loaded repeatedly by K × K times, which is the size of a weight map, and loaded repeatedly by D times, which D is the number of the filters, for example, the number of the channels of the output 209. Thus, the data of the input 208 may be loaded by a total of K × K × C × D × W × H times because the data of the input 208 of the size of W × H × C is loaded repeatedly by K × K × D times. Here, a data loading number to perform the convolution operation may be 2 × K × K × C × D × W × H, which is a sum of a loading number of the kernel 301 and a loading number of the input 208.

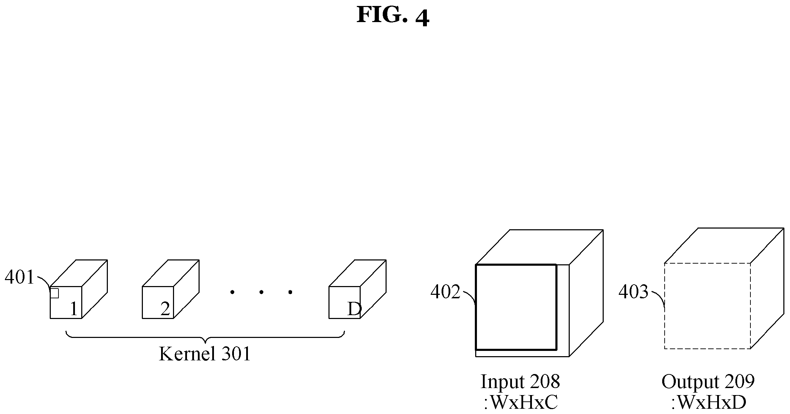

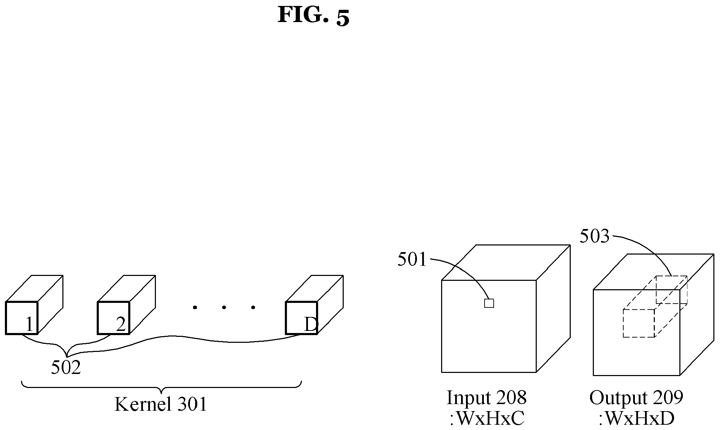

When performing the convolution operation based on the first operation mode, the CNN processing apparatus reduces the data loading number and an operation performing number by reusing the kernel 301. An example of the first operation mode will be described with reference to FIG. 4. In another example, when performing the convolution operation based on the second operation mode, the CNN processing apparatus reduces the data loading number and the operation performing number by reusing the input 208. An example of the second operation mode will be described with reference to FIG. 5.

FIG. 4 is a diagram illustrating an example of a first operation mode. The first operation mode may also be referred to as a kernel reusing mode.

In one example, the CNN processing apparatus performs a convolution operation by loading kernel elements included in the kernel 301 and reusing the loaded kernel elements. Referring to FIG. 4, the CNN processing apparatus loads a kernel element 401 included in the kernel 301. The CNN processing apparatus loads input elements 402 corresponding to the loaded kernel element 401 among a plurality of input elements included in the input 208, based on first information specifying the input elements 402 corresponding to the loaded kernel element 401. The CNN processing apparatus performs an operation between the loaded kernel element 401 and the loaded input elements 402.

The CNN processing apparatus updates, among a plurality of output elements included in the output 209, output elements 403 to which results of the operation between the loaded kernel element 401 and the input elements 402 are mapped, based on second information specifying the output elements 403. The CNN processing apparatus updates the output elements 403 using the results of the operation between the loaded kernel element 401 and the loaded input elements 402.

In the first operation mode, the first information may specify input elements corresponding to the kernel elements included in the kernel 301 among the input elements included in the input 208. The first information may be determined based on locations of the kernel elements included in the kernel 301, a size of $K \times K \times C \times D$ and a stride of the kernel 301, and a size of $W \times H \times C$ and a pad of the input 208. For example, in a case that a size of the input 208 to which padding is applied is $W \times H \times C$ and a stride is 1, the first information may specify the input elements 402 corresponding to the kernel element 401 among the input elements in the input 208 based on a location of the kernel element 401.

In the first operation mode, the second information may specify, among the output elements included in the output 209, output elements to which results of an operation between the kernel elements and the specified input elements are mapped. The second information may be determined based on the locations of the kernel elements included in the kernel 301 and locations of the input elements specified by the first information. For example, the second information may specify the location of the kernel element 401 and the output elements 403 to which the results of the operation between the kernel element 401 and the input elements 402 are mapped. The output elements 403 updated by the results of the operation associated with the kernel element 401 may be updated by another kernel element different from the kernel element, and thus depicted by a broken line in FIG. 4 because the output elements 403 may not be a final output.

The CNN processing apparatus performs operations associated with the loaded kernel element 401, and then loads a subsequent kernel element. The CNN processing apparatus loads input elements corresponding to the loaded subsequent kernel element based on the first information. The CNN processing apparatus updates output elements to which results of an operation between the loaded subsequent kernel element and the loaded input elements are mapped, based on the second information. In the first operation mode, the CNN processing apparatus loads, once, each of the kernel elements included in the kernel 301. When performing the convolution operation, the CNN processing apparatus reuses a loaded kernel element by a number of times corresponding to a number of input elements corresponding to the loaded kernel element. For example, in the first operation mode, the CNN processing apparatus needs to load the kernel elements in the kernel 301 only once, and thus a loading number of the kernel 301 is $K \times K \times C \times D$, for example, the size of the kernel 301. In the first operation mode, the CNN processing apparatus loads the input elements in the input 208 by $K \times K \times D$ times and, in a case of a stride being 1, a loading number of the input 208 is $K \times K \times C \times D \times W \times H$. In such a case, a data loading number in the first operation mode, hereinafter simply referred to as a first data loading number, is $K \times K \times C \times D(1 + W \times H)$, and thus the CNN processing apparatus reduces of a data loading number by using the first operation mode.

In the first operation mode, the CNN processing apparatus determines whether the loaded kernel element 401 is 0. In response to the loaded kernel element 401 being 0, the CNN processing apparatus skips loading of the input elements 402 corresponding to the kernel element 401 or skips the operations associated with the kernel element 401. In a case of loaded data being 0, a method of skipping additional loading or operation associated with the data is referred to as zero skipping. The CNN processing apparatus reduces the first data loading number using the zero skipping. For example, in a case that a number of kernel elements being 0 among kernel elements included in a kernel is $Z_k$, the CNN processing apparatus skips loading of input elements corresponding to the kernel elements being 0, and thus a loading number of the input 208 in a case of a stride being 1 is $W \times H \times (K \times K \times C \times D - Z_k)$. In such a case, the first data loading number is $K \times K \times C \times D + W \times H \times (K \times K \times C \times D - Z_k)$, and the CNN processing apparatus skips operations associated with the $Z_k$ kernel elements through the zero skipping.

FIG. 5 is a diagram illustrating an example of a second operation mode. The second operation mode may also be referred to as an input reusing mode.

In one example, the CNN processing apparatus may perform a convolution operation by loading input elements included in the input 208 and reusing the loaded input elements. Referring to FIG. 5, the CNN processing apparatus loads an input element 501 included in the input 208. The CNN processing apparatus loads kernel elements 502 corresponding to the loaded input element 501 among a plurality of kernel elements included in the kernel 301, based on first information specifying the kernel elements 502. The CNN processing apparatus performs an operation between the loaded input element 501 and the loaded kernel elements 502.

The CNN processing apparatus updates output elements 503 to which results of the operation between the loaded input element 501 and the kernel elements 502 are mapped among a plurality of output elements included in the output 209, based on second information specifying the output elements 503. The CNN processing apparatus updates the output elements 503 using the results of the operation between the loaded input element 501 and the loaded kernel elements 502.

In the second operation mode, the first information may specify kernel elements corresponding to input elements included in the input 208 among the kernel elements included in the kernel 301. The first information may be determined based on locations of the input elements included in the input 208, a size of $K \times K \times C \times D$ and a stride of the kernel 301, and a size of $W \times H \times C$ and a pad of the input 208. For example, in a case that a size of the input 208 to which padding is applied is $W \times H \times C$ and a stride is 1, the first information may specify the kernel elements 502 corresponding to the input element 501 among the kernel elements in the kernel 301 based on a location of the input element 501.

In the second operation mode, the second information may specify output elements to which results of an operation between the input elements and the specified kernel elements are mapped among the output elements included in the output 209. The second information may be determined based on locations of the input elements included in the input 208 and locations of the kernel elements specified by the first information. For example, as illustrated in FIG. 5, the second information specifies the location of the input element 501 and the output elements 503 to which the results of the operation between the input element 501 and the kernel elements 502 are mapped. The output elements 503 updated by the results of the operation associated with the input element 501 may be updated by other input elements different from the input element 501, and thus the output elements 503 are depicted by a broken line because the output elements 503 may not be a final output.

The CNN processing apparatus performs the operations associated with the loaded input element 501, and loads a subsequent input element. The CNN processing apparatus loads kernel elements corresponding to the loaded subsequent input element based on the first information. The CNN processing apparatus updates output elements to which results of an operation between the loaded subsequent input element and the loaded kernel elements are mapped, based on the second information. In the second operation mode, the CNN apparatus loads, once, each of the input elements included in the input 208. When performing the convolution operation, the CNN processing apparatus reuses an input element loaded by a number of times corresponding to a number of kernel elements corresponding to the loaded input element. For example, in the second operation mode, the CNN processing apparatus loads the input elements in the input 208 only once, and thus a loading number of the input 208 is $W \times H \times C$, for example, a size of the input 208. In the second operation mode, the CNN processing apparatus loads the kernel elements in the kernel 301 repeatedly by $W \times H$ times, and thus, in a case of a stride being 1, a loading number of the kernel 301 is $K \times K \times C \times D \times W \times H$. In such a case, a data loading number in the second operation mode, hereinafter simply referred to as a second data loading number, is $W \times H \times C(1 + K \times K \times D)$, and thus the CNN processing apparatus reduces a data loading number by using the second operation mode.

In the second operation mode, the CNN processing apparatus determines whether the loaded input element 501 is 0. In response to the loaded input element 501 being 0, the CNN processing apparatus skips loading of the kernel elements 502 corresponding to the input element 501 or skips the operations associated with the input element 501. The CNN processing apparatus reduces the second data loading number using the zero skipping. For example, when a number of input elements included in an input being 0 is $Z_i$, the CNN processing apparatus skips loading kernel elements corresponding to the input elements being 0, and thus, in a case of a stride being 1, a loading number of the kernel 301 is $K \times K \times D \times (W \times H \times C - Z_i)$. In such an example, the second data loading number is $W \times H \times C + K \times K \times D \times (W \times H \times C - Z_i)$, and the CNN processing apparatus may skip operations associated with the $Z_i$ input elements through the zero skipping.

An input element being 0 among a plurality of input elements in an input may be generated by a rectified liner unit (ReLU) function that is employed as an activation function of a CNN. In a case that a ReLU is employed by a middle convolution layer of the CNN, an input of a subsequent convolution layer may include input elements being 0. The ReLU function may be represented by $F(x) = max(0, x)$, in which x denotes a convolution result and $F(x)$ denotes an output value by the ReLU function. The convolution result, which is a negative value, may be output as 0 by the ReLU function. A trained convolution kernel may follow a normal distribution, and a convolution result with respect to an input image may be probabilistically a negative value by 50% and a positive value by 50%.

In one example, an input element being 0 among a plurality of input elements in an input may be generated by up-scaling that is used in a process of a CNN. The up-scaling may be used to increase a resolution of an input. For example, through the up-scaling, new pixels may be generated around each pixel included in the input. In such an example, the generated new pixels may be set to be 0. For example, in image segmentation, a resolution may decrease by pooling or sampling, and an original resolution may be restored by unspooling or unsampling. Here, pixels newly generated in a process of restoring the resolution may be set to be 0. As a result of the unspooling or unsampling, 75% or higher of pixel values may be 0.

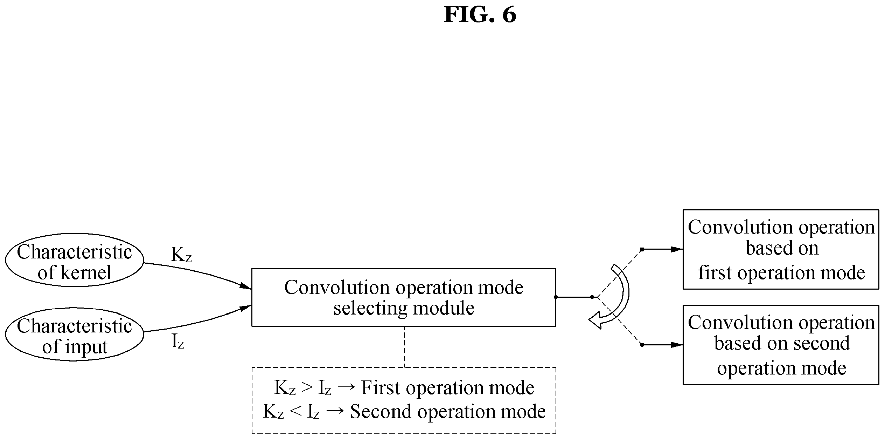

FIG. 6 is a diagram illustrating an example of a process of selecting an operation mode.

Referring to FIG. 6, the CNN processing apparatus may include a convolution operation mode selecting module, and the convolution operation mode selecting module refers to a module configured to select an operation mode for each of convolution layers of a CNN. The CNN processing apparatus may consider a characteristic of a kernel and a characteristic of an input of a convolution layer to select an operation mode of the convolution layer. The characteristic of the kernel may include at least one of a ratio of 0 in kernel elements included in the kernel or a size of the kernel. The characteristic of the input may include at least one of a ratio of 0 in input elements included in the input or a size of the input. The CNN processing apparatus may select an operation mode satisfying a constraint associated with at least one of a data loading number or a capacity of an operating memory based on at least one of the characteristic of the kernel or the characteristic of the input.

As illustrated in FIG. 6, the CNN processing apparatus obtains, from an input of a convolution layer, a ratio $I_z$ of 0 in input elements included in the input. The CNN processing apparatus obtains a ratio $K_z$ of 0 in kernel elements included in a kernel of the convolution layer. For example, the ratio $I_z$ may vary depending on an input of a corresponding convolution layer, and thus the CNN processing apparatus may dynamically extract the ratio $I_z$ from the input. The ratio $K_z$ may be a value determined by a predesigned CNN, and thus obtained from a database. The CNN processing apparatus selects an operation mode corresponding to a greater value between the obtained ratio $I_z$ and the obtained ratio $K_z$. The CNN processing apparatus may select the operation mode of the convolution layer as illustrated in FIG. 6 based on which one of the ratio $I_z$ and the ratio $K_z$ is greater.

In one example, the CNN processing apparatus may select the operation mode based on a ratio between a size of the input and a size of the kernel. For example, the CNN processing apparatus may obtain a ratio between a size of a frame included in the input and a size of a weight map included in the kernel, and select the operation mode by comparing the obtained ratio to a predefined ratio. The size of the frame and the size of the weight map may be determined when the CNN is designed, and thus the CNN processing apparatus may obtain, from the database, at least one of the ratio, a result of comparing the ratio to the predefined ratio, or the selected operation mode.

The CNN processing apparatus selects the operation mode corresponding to a smaller value between a first data loading number and a second data loading number. This is to employ an operation mode with a relatively smaller data loading number. The first data loading number is calculated by a sum of a kernel loading number calculated based on the size of the kernel and an input loading number calculated based on a number of 0s among the kernel elements in the kernel and the size of the input. The first data loading number may be calculated without considering a number of 0s among the input elements in the input, and thus may be determined when the CNN is designed, and the CNN processing apparatus may obtain the first data loading number from the database. The CNN processing apparatus dynamically obtains, from the input, the number of 0s among the input elements included in the input. The CNN processing apparatus calculates the second data loading number based on a sum of an input loading number calculated based on the size of the input and a kernel loading number calculated based on the number of 0s among the input elements in the input and the size of the kernel. The number of 0s in the input may not be a prestored value, and thus the CNN processing apparatus may calculate the second data loading number for each convolution layer. The CNN processing apparatus may select the operation mode suitable for the convolution layer by comparing the first data loading number obtained from the database and the second data loading number dynamically calculated.

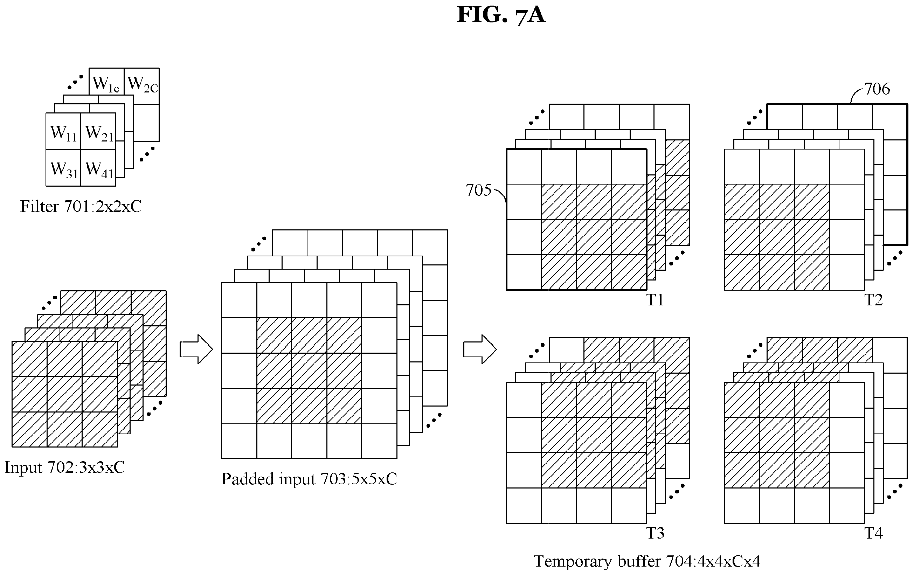

FIGS. 7A through 7C are diagrams illustrating an example of a first operation mode.

The CNN processing apparatus allocates at least one temporary buffer to perform a convolution operation based on a first operation mode, and store input elements in the allocated temporary buffer. The CNN processing apparatus performs the convolution operation for each kernel element using the input elements stored in the temporary buffer. An example of the first operation mode based on such an allocation of a temporary buffer will be described hereinafter with reference to FIGS. 7A through 7C.

Referring to FIG. 7A, in the first operation mode, the CNN processing apparatus performs a convolution operation between a filter 701 of a size of $2 \times 2 \times C$ and an input 702 of a size of $3 \times 3 \times C$. The filter 701 includes weight maps of which a size of each weight map is $2 \times 2$, and a number of the weight maps is C. The input 702 includes frames of which a size of each frame is $3 \times 3$, and a number of the frames is C. A padded input 703 refers to an input obtained by applying, to the input 702, padding using a pad of 1, and a size of the padded input 703 is $5 \times 5 \times C$. Here, the example is described under the assumption that a stride is 1.

The CNN processing apparatus allocates a temporary buffer 704 corresponding to kernel elements included in the filter 701. A size of a weight map of the filter 701 is $2 \times 2$ and the stride is 1, and thus input elements in the padded input 703 corresponding to each kernel element, for example, a weight, of the filter 701 is restricted to a size of $4 \times 4$. The CNN processing apparatus allocates the temporary buffer 704 to store the input elements corresponding to each kernel element in the filter 701. For example, as illustrated in FIG. 7A, the CNN processing apparatus allocates a portion of a temporary buffer $T_1$, for example, a foremost portion, for input elements 705 corresponding to a kernel element $w_{11}$, allocates a portion of a temporary buffer $T_2$, for example, a rearmost portion, for input elements 706 corresponding to a kernel element $w_{2c}$, and loads the input elements 705 and 706 and stores the loaded input elements 705 and 706. The size of the weight map of the filter 701 is 2 $\times$ 2, and thus the CNN processing apparatus allocates temporary buffers $T_1$, $T_2$, $T_3$, and $T_4$ as illustrated. The temporary buffer $T_1$ corresponds to kernel elements $w_{11}$, $w_{12}$, ..., $w_{1c}$, the temporary buffer $T_2$ corresponds to kernel elements $w_{21}$, $w_{22}$, ..., $w_{2c}$, the temporary buffer $T_3$ corresponds to kernel elements $w_{31}$, $w_{32}$, ..., $w_{3c}$, and the temporary buffer $T_4$ corresponds to kernel elements $w_{41}$, $w_{42}$, ..., $w_{4c}$.

The size of the weight map is $2 \times 2$, the size of each frame of the padded input 703 is $5 \times 5$, and the stride is 1, and thus the CNN processing apparatus determines a size of input elements being involved in an operation with each kernel element to be $4 \times 4$, and allocates the temporary buffers $T_1$, $T_2$, $T_3$, and $T_4$ of a size of $4 \times 4 \times C$. Thus, the CNN processing apparatus allocates the temporary buffer 704 of a size of $4 \times 4 \times C \times 4$.

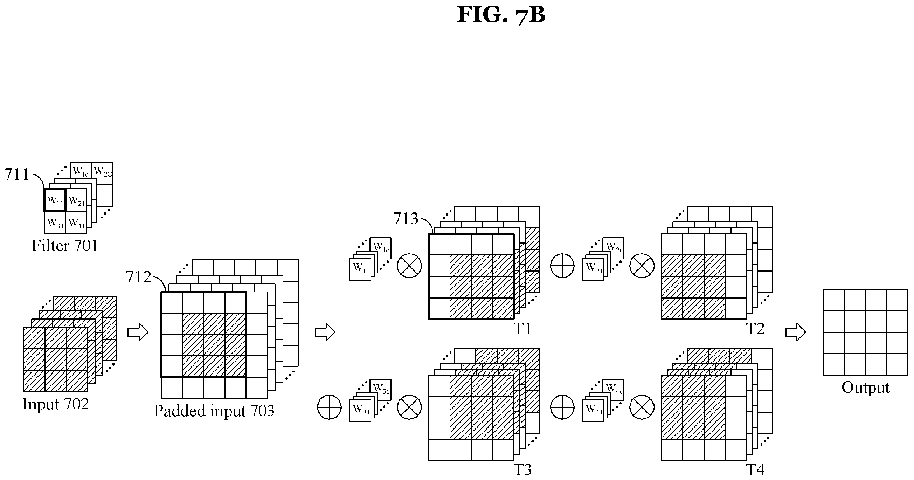

Referring to FIG. 7B, the CNN processing apparatus loads kernel elements, and performs a convolution operation based on the loaded kernel elements and a temporary buffer. The CNN processing apparatus generates an output based on results of operations between the loaded kernel elements and input elements stored in the temporary buffer. As illustrated in FIG. 7B, the CNN processing apparatus performs a two-dimensional (2D) matrix scalar multiplication $\otimes$ between kernel elements $w_{11}, w_{12}, ..., w_{1c}$ and input elements stored in a temporary buffer $T_1$, a 2D matrix scalar multiplication $\otimes$ between kernel elements $w_{21}, w_{22}, ... w_{2c}$ and a temporary buffer $T_2$, a 2D matrix scalar multiplication $\otimes$ between kernel elements $w_{31}, w_{32}, ... w_{3c}$ and input elements stored in a temporary buffer $T_3$, and a 2D matrix scalar multiplication $\otimes$ between kernel elements $w_{41}, w_{42}, ..., w_{4c}$ and input elements stored in a temporary buffer $T_4$, and generates an output through a 2D matrix wise addition $\oplus$ of results of the operations. For example, the CNN processing apparatus loads a kernel element $w_{11}$ among kernel elements included in the filter 701, loads input elements 712 corresponding to the kernel element $w_{11}$ and stores the loaded input elements 712 in the temporary buffer $T_1$, and performs an operation between input elements 713 stored in the temporary buffer $T_1$ and the kernel el-

ement $w_{11}$. In such an example, the CNN processing apparatus may load the kernel elements only once, and a temporary buffer is classified into the temporary buffers $T_1$ through $T_4$, and thus the CNN processing apparatus may load the input elements four times repeatedly.

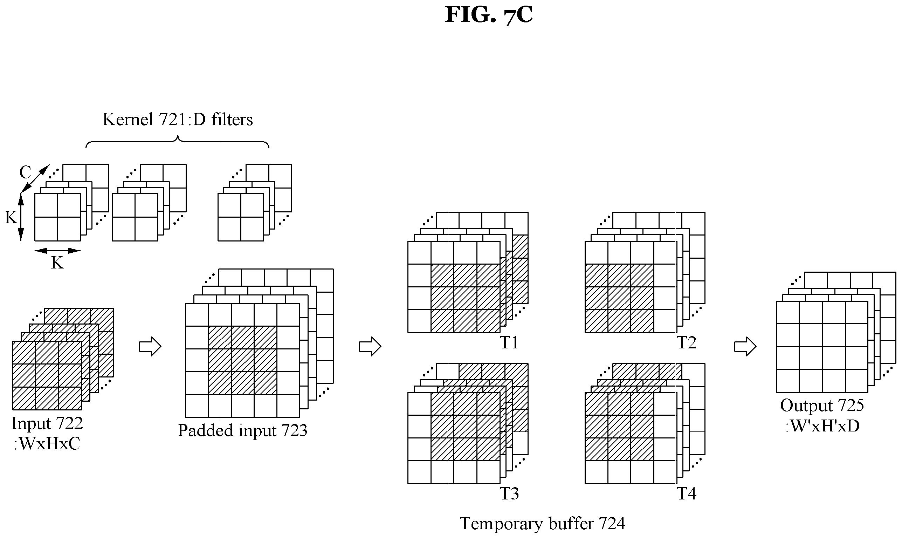

Referring to FIG. 7C, the CNN processing apparatus allocates a temporary buffer 724 based on a padded input 723 obtained by applying padding to an input 722 of a size of $W \times H \times C$ and on a kernel 721 of a size of $K \times K \times C \times D$. The CNN processing apparatus generates an output 725 based on the padded input 723 and the temporary buffer 724. Here, the operations described with reference to FIG. 7B may be applied to each of D filters.

When an operation with a loaded kernel element is terminated, the CNN processing apparatus loads another kernel element. In response to the other kernel element not being 0, the CNN processing apparatus performs a convolution operation. Here, in a case that input elements corresponding to a previous kernel element and input elements corresponding to the other kernel element are identical, the CNN processing apparatus performs a convolution operation using input elements previously stored in the temporary buffer.

The CNN processing apparatus determines whether a loaded kernel element is 0. In response to the loaded kernel element being 0, the CNN processing apparatus skips allocation of a temporary buffer associated with the kernel element being 0 or skips an operation associated with the kernel element being 0. In response to the loaded kernel element not being 0, the CNN processing apparatus allocates a temporary buffer as described above. Although the first operation mode is described in association with allocation of a temporary buffer, the examples described above may be applied to the second operation mode. In a case that a temporary buffer is allocated in the second operation mode, the CNN processing apparatus stores kernel elements in the allocated temporary buffer.

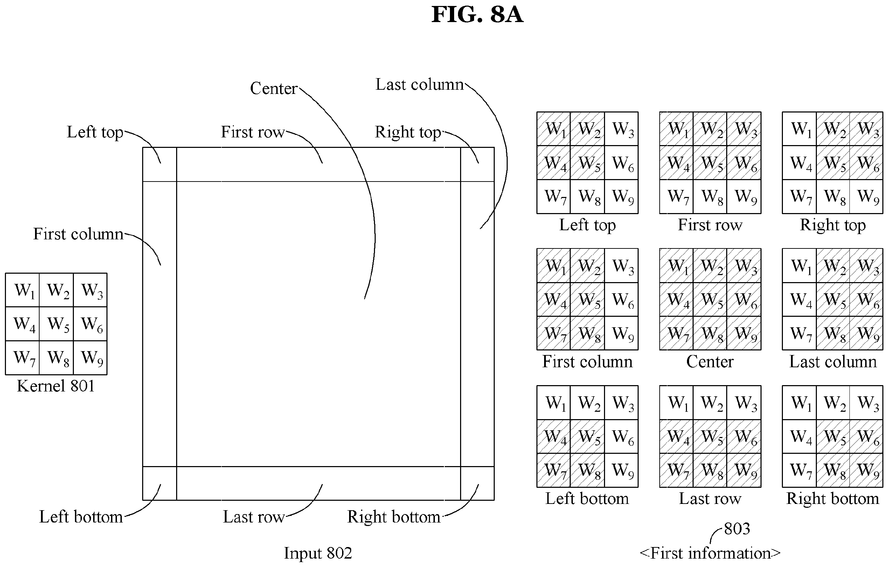

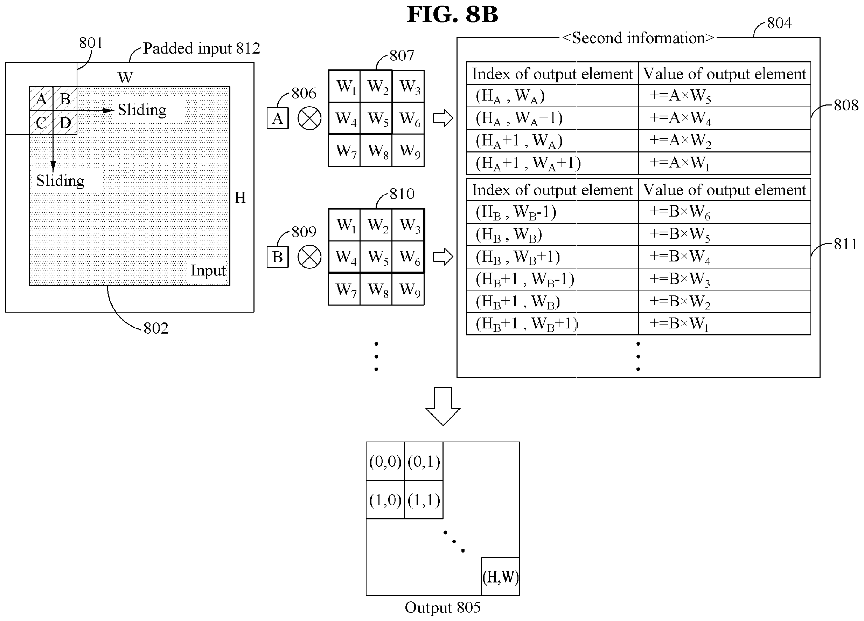

FIGS. 8A and 8B are diagrams illustrating an example of a second operation mode.

Referring to FIG. 8A, in a case that a size of a kernel 801 is $3 \times 3$, a stride is 1, and a pad of an input 802 is 1, first information 803 specifies kernel elements corresponding to an input element among a plurality of kernel elements, for example, $w_1, ..., w_9$. For example, the first information 803 specifies kernel elements $w_1$, $w_2$, $w_4$, and $w_5$ corresponding to an input element located at a left top, and kernel elements corresponding to each input element as illustrated in FIG. 8A. The first information 803 specifies kernel elements corresponding to locations of input elements, for example, a left top, a first row, a right top, ...., a right bottom, based on the size 3 $\times$ 3 of the kernel 801, the stride being 1, and a size and the pad being 1 of the input 802. The CNN processing apparatus loads one input element included in the input 802, and loads kernel elements corresponding to the loaded input element based on the first information 803.

Referring to FIG. 8B, second information 804 specifies, among a plurality of output elements included in an output 805, output elements to which results of operations between a loaded input element and kernel elements are mapped. In a case that a size of the input 802 is W × H and the kernel 801 is slid (for example, a stride of 1) in a padded input 812 to which padding with a pad of 1 is applied, the CNN processing apparatus loads an input element A 806 and loads kernel elements 807 based on the first information 803. The CNN processing apparatus updates output elements based on information 808 specifying output elements $(H_A, WA)$, $(H_A, W_A + 1)$, $(H_A + 1, WA)$, and $(H_A + 1, W_A + 1)$ to which results of operations between the loaded input element A 806 and the loaded kernel elements 807 are mapped. In indices of output elements illustrated in FIG. 8B, $H_A$ and $W_A$ are indices indicating a row and a column of the input element A 806, respectively. Similarly, the CNN processing apparatus loads an input element B 809 and kernel elements 810, and updates output elements based on information 811 specifying the output elements to which results of operations between the loaded input element B 809 and the loaded kernel elements 810 are mapped. In the second operation mode, the CNN processing apparatus reduces a data loading number and an operation performing number through a method of loading and reusing am input element. For example, in a case of a loaded input element being 0, the CNN processing apparatus skips loading of data based on first information and skip an operation based on second information. An example of the second operation mode based on the first information and the second information may also be applied to the first operation mode.

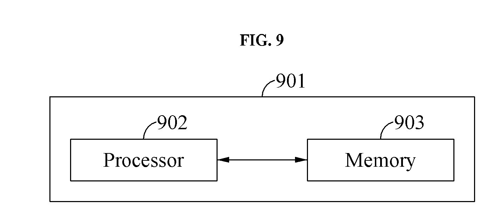

FIG. 9 is a diagram illustrating an example of a CNN processing apparatus.

Referring to FIG. 9, a CNN processing apparatus 901 includes a processor 902 and a memory 903. The processor 902 may include at least one unit or device described with reference to FIGS. 1 through 8B, or perform at least one process or method descried with reference to FIGS. 1 through 8B. The memory 903 may store at least one of characteristics of inputs of convolution layers and characteristics of kernels of the convolution layers, or data loading numbers, or store a program embodying a CNN processing method. The memory 903 may be a volatile memory or a nonvolatile memory.

The processor 902 may execute a program, and control the CNN processing apparatus 901. A program code to be executed by the processor 902 may be stored in the memory 903. The CNN processing apparatus 901 may be connected to an external device, for example, a personal computer (PC) or a network, through an input and output device (not shown), and exchange data with the external device.

The CNN processing apparatus 901 may be used in a CNN accelerator configured to process an operation associated with a CNN at a high speed, and a neural processing unit (NPU) or a vision processing unit (VPU), to control a corresponding dedicated processor. The CNN processing apparatus 901 may employ various types of hardware, or be employed by various types of hardware, based on an intent for designing the CNN processing apparatus 901. The CNN processing apparatus 901 may not be limited to the illustrated examples of components or units. When applying the examples described above to process the CNN, the CNN processing apparatus 901 reduces a data loading number and an operation performing number, for example, a MAC operation performing number, which are needed for processing the CNN, and thus reduce use of a memory and increase a processing speed. Thus, the examples described above may be suitable to an environment using a limited resource or an embedded terminal.

The apparatuses, units, modules, devices, and other components illustrated in FIG. 9 that perform the operations described herein with respect to FIGS. 1, 2, 3, 4, 5, 6, 7A through 7C, and 8A and 8B are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 1, 2, 3, 4, 5, 6, 7A through 7C, and 8A and 8B. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

**Claims**

1. A computer-implemented method of processing a convolutional neural network, CNN, the method comprising:

- selecting (101), based on at least a characteristic of a kernel (301) of a convolution layer (201, 202, 203) and a characteristic of an input (204, 206, 208, 802) of the convolution layer, one operation mode from a first operation mode reusing the kernel and a second operation mode reusing the input, wherein the selecting of the operation mode comprises selecting the operation mode corresponding to a smaller value between a first data loading number in the first operation mode and a second data loading number in the second operation mode; wherein the selecting of the operation mode comprises:

- obtaining the first data loading number, wherein the first data loading number is calculated based on a sum of a kernel loading number calculated based on a size of the kernel, and an input loading number calculated based on a number of 0s among kernel elements included in the kernel and a size of the input; and
- obtaining a number of 0s among input elements included in the input; and calculating the second data loading number based on a sum of an input loading number calculated based on a size of the input and a kernel loading number calculated based on the number of 0s among the input elements and a size of the kernel; and

- performing (102) a convolution operation based on the selected operation mode, wherein the performing of the convolution operation comprises:

- in response to the first operation mode being selected,

loading one kernel element among kernel elements ($w_{11}$, $w_{12}$, ..., $w_{1c}$ ; $w_{21}$, $w_{22}$, ..., $w_{2c}$; $w_{31}$, $w_{32}$, ..., $w_{3c}$; $w_{41}$, $w_{42}$, ..., $w_{4c}$) included in the kernel; in response to the loaded kernel element being 0, skipping allocation of a temporary buffer; in response to the loaded kernel element not being 0:

allocating the temporary buffer (T1; T2; T3; T4); loading input elements (705, 706) corresponding to the loaded kernel element and storing, in the allocated temporary buffer, the loaded input elements (705, 706); performing a matrix scalar multiplication between the loaded kernel

element ($w_{11}$, $w_{12}$, ..., $w_{1c}$ ; $w_{21}$, $w_{22}$, ..., $w_{2c}$; $w_{31}$, $w_{32}$, ..., $w_{3c}$; $w_{41}$, $w_{42}$, ..., $w_{4c}$) and the input elements stored in the temporary buffer (T1; T2; T3; T4); and

updating output elements to which results of the matrix scalar multiplication are mapped via a matrix wise addition;

- in response to the second operation mode being selected,

loading one input element among input elements ($w_1$, ..., $w_9$) included in the input (802); in response to the loaded input element being 0, skipping allocation of a temporary buffer; in response to the loaded input element not being 0:

allocating the temporary buffer; loading kernel elements corresponding to the loaded input element and storing, in the allocated temporary buffer, the loaded kernel elements; performing a matrix scalar multiplication between the loaded input element (B 809) and the kernel elements (810)stored in the temporary buffer; updating output elements ($H_A$, $w_A$; $H_A$, $W_A$ + 1; $H_A$ + 1, $W_A$; $H_A$ + 1, $W_A$ + 1) to which results of the matrix scalar multiplication are mapped via a matrix wise addition.

2. The computer-implemented method of claim 1, wherein the CNN comprises a plurality of convolution layers (201, 202, 203), and wherein the method further comprises selecting the operation mode for each of the convolution layers from the first operation mode and the second operation mode by applying the selecting step of claim 1 to each layer.

3. The computer-implemented method of any one of the previous claims, wherein the first data loading number is calculated based on the sum: $K \times K \times C \times D + W \times H \times (K \times K \times C \times D - Zk)$, wherein

- the size of the kernel is $K \times K \times C \times D$, the kernel including D filters, a size of each filter being $K \times K \times C$;

- the number of 0s among the kernel elements is $Z_k$:
- the size of the input is $W \times H \times C$; and

wherein the second data loading number is calculated based on the sum: $W \times H \times C + K \times K \times D \times (W \times H \times C - Zi)$, wherein:

- the size of the input is $W \times H \times C$;
- the size of the kernel is $K \times K \times C \times D$, the kernel including D filters, a size of each filter being $K \times K \times C$;
- the number of 0s among the input elements is Zi.

4. A non-transitory computer-readable storage medium storing instructions to cause computing hardware to perform the method of any one of the previous claims.

5. An apparatus for processing a convolutional neural network, CNN, the apparatus comprising:
a processor configured to perform the method of any one of the claims 1-3.

**Patentansprüche**

1. Prozessorimplementiertes Verfahren zur Verarbeitung eines neuronalen Konvolutionsnetzwerks (CNN, Convolutional Neural Network), wobei das Verfahren Folgendes umfasst:

- basierend auf mindestens einer Eigenschaft eines Kernels (301) einer Faltungsschicht (201, 202, 203) und einer Eigenschaft einer Eingabe (204, 206, 208, 802) der Faltungsschicht, Auswählen (101) eines Betriebsmodus aus einem ersten Betriebsmodus, der den Kernel wiederverwendet, und einem zweiten Betriebsmodus, der die Eingabe wiederverwendet, wobei das Auswählen des Betriebsmodus das Auswählen des Betriebsmodus umfasst, der einem kleineren Wert zwischen einer ersten Datenladezahl in dem ersten Betriebsmodus und einer zweiten Datenladezahl in dem zweiten Betriebsmodus entspricht; wobei das Auswählen des Betriebsmodus Folgendes umfasst:

- Erhalten der ersten Datenladezahl, wobei die erste Datenladezahl berechnet wird basierend auf einer Summe einer Kernel-Ladezahl, die basierend auf einer Größe des Kernels berechnet wird, und einer Eingabeladezahl, die basierend auf einer Anzahl von Nullen unter Kernel-Elementen, die in dem Kernel enthalten sind, und einer Größe der Eingabe berechnet wird; und

- Erhalten einer Anzahl von Nullen unter Eingabeelementen, die in der Eingabe enthalten sind; und Berechnen der zweiten Datenladezahl basierend auf einer Summe einer Eingabeladezahl, die basierend auf einer Größe der Eingabe berechnet wird, und einer Kernel-Ladezahl, die basierend auf der Anzahl von Nullen unter den Eingabeelementen und einer Größe des Kernels berechnet wird; und

- Durchführen (102) einer Faltungsoperation basierend auf dem ausgewählten Betriebsmodus, wobei das Durchführen der Faltungsoperation Folgendes umfasst:

- als Reaktion auf die Auswahl des ersten Betriebsmodus,

Laden eines Kernel-Elements unter Kernel-Elementen ($w_{11}$, $w_{12}$, ..., $w_{1c}$; $w_{21}$, $w_{22}$, ..., $w_{2c}$; $w_{31}$, $w_{32}$, . $w_{3c}$; $w_{41}$, $w_{42}$, . $w_{4c}$), die in dem Kernel enthalten sind;
als Reaktion darauf, dass das geladene Kernel-Element Null ist, Überspringen der Zuordnung eines temporären Puffers;
als Reaktion darauf, dass das geladene Kernel-Element nicht Null ist:

Zuweisen des temporären Puffers (T1; T2; T3; T4);
Laden von Eingabeelementen (705, 706), die dem geladenen Kernel-Element entsprechen, und Speichern der geladenen Eingabeelemente (705, 706) in dem zugewiesenen temporären Puffer;
Durchführen einer Matrix-Skalarmultiplikation zwischen dem geladenen Kernel-Element ($w_{11}$, $w_{12}$, ..., $w_{1c}$; $w_{21}$, $w_{22}$, ..., $w_{2c}$; $w_{31}$, $w_{32}$, ..., $w_{3c}$; $w_{41}$, $w_{42}$, ..., $w_{4c}$) und den in dem temporären Puffer (T1; T2; T3; T4) gespeicherten Eingabeelementen; und
Aktualisieren von Ausgabeelementen, auf die die Ergebnisse der Matrix-Skalarmultiplikation abgebildet werden, über eine matrixweise Addition;

- als Reaktion auf die Auswahl des zweiten Betriebsmodus,

Laden eines Eingabeelements unter Eingabeelementen ($w_1$, ..., $w_9$), die in

der Eingabe (802) enthalten sind;
als Reaktion darauf, dass das geladene Eingabeelement Null ist, Überspringen der Zuordnung eines temporären Puffers;
als Reaktion darauf, dass das geladene Eingabeelement nicht Null ist:

Zuweisen des temporären Puffers;
Laden von Kernel-Elementen, die dem geladenen Eingabeelement entsprechen, und Speichern der geladenen Kernel-Elemente in dem zugewiesenen temporären Puffer;
Durchführen einer Matrix-Skalarmultiplikation zwischen dem geladenen Eingabeelement (B 809) und den in dem temporären Puffer gespeicherten Kernel-Elementen (810);
Aktualisieren von Ausgabeelementen ($H_A$, $W_A$, $H_A$ + 1, $W_A$ +1, $H_A$ +1, $W_A$, $H_A$ +1, $W_A$ +1), auf die die Ergebnisse der Matrix-Skalarmultiplikation abgebildet werden, über eine matrixweise Addition.

2. Computerimplementiertes Verfahren nach Anspruch 1, wobei das CNN eine Vielzahl von Faltungsschichten (201, 202, 203) umfasst und wobei das Verfahren ferner Folgendes umfasst:
Auswählen des Betriebsmodus für jede der Faltungsschichten aus dem ersten Betriebsmodus und dem zweiten Betriebsmodus durch Anwenden des Auswahlschritts nach Anspruch 1 auf jede Schicht.

3. Computerimplementierte Verfahren nach einem der vorhergehenden Ansprüche,

wobei die erste Datenladezahl basierend auf der folgenden Summe berechnet wird: $K \times K \times C \times D + W \times H \times (K \times K \times C \times D - Zk)$, wobei

- die Größe des Kernels gleich $K \times K \times C \times D$ ist, wobei der Kernel D Filter enthält, wobei eine Größe jedes Filters gleich $K \times K \times C$ ist;
- die Anzahl der Nullen unter den Kernel-Elementen gleich $Z_k$ ist;
- die Größe der Eingabe gleich $W \times H \times C$ ist; und

wobei die zweite Datenladezahl basierend auf der folgenden Summe berechnet wird: $W \times H \times C + K \times K \times D \times (W \times H \times C - Zi)$, wobei:

- die Größe der Eingabe gleich $W \times H \times C$

ist;
- die Größe des Kernels gleich K × K × C × D ist, wobei der Kernel D Filter enthält, wobei eine Größe jedes Filters gleich K × K × C ist;
- die Anzahl von Nullen unter den Eingabeelementen gleich Zi ist.

4. Nicht flüchtiges, computerlesbares Speichermedium, auf dem Anweisungen gespeichert sind, die eine Computerhardware dazu veranlassen, das Verfahren nach einem der vorhergehenden Ansprüche auszuführen.

5. Vorrichtung zur Verarbeitung eines neuronalen Konvolutionsnetzwerks (CNN, Convolutional Neural Network), wobei die Vorrichtung Folgendes umfasst: einen Prozessor, der konfiguriert ist, um das Verfahren nach einem der Ansprüche 1 bis 3 durchzuführen.

**Revendications**

1. Procédé de traitement d'un réseau de neurones convolutif (RNN) mis en œuvre par ordinateur, le procédé comprenant :

- la sélection (101), compte tenu d'au moins une caractéristique d'un noyau (301) d'une couche de convolution (201, 202, 203) et d'une caractéristique d'une entrée (204, 206, 208, 802) de la couche de convolution, d'un mode d'exploitation parmi un premier mode d'exploitation qui réutilise le noyau et d'un deuxième mode d'exploitation qui réutilise l'entrée, ladite sélection du mode d'exploitation comprenant la sélection du mode d'exploitation qui correspond à une moindre valeur entre un premier nombre de chargements de données sous le premier mode d'exploitation et un deuxième nombre de chargements de données sous le deuxième mode d'exploitation ; ladite sélection du mode d'exploitation comprenant :

- l'obtention du premier nombre de chargements de données, ledit premier nombre de chargements de données étant calculé compte tenu de la somme du nombre de chargements du noyau, calculé compte tenu de la taille du noyau, et du nombre de chargements de l'entrée calculé compte tenu du nombre de zéros parmi les éléments de noyau présents dans le noyau et de la taille de l'entrée, et
- l'obtention du nombre de zéros parmi des éléments d'entrée présents dans l'entrée ; et le calcul du deuxième nombre de chargements de données compte tenu de la somme du nombre de chargements de l'entrée, calculé compte tenu de la taille de l'entrée, et du nombre de chargements du noyau calculé compte tenu du nombre de zéros parmi les éléments d'entrée et de la taille du noyau ; et

- la réalisation (102) d'une opération de convolution compte tenu du mode d'exploitation sélectionné, ladite réalisation de l'opération de convolution comprenant :

- en réaction à la sélection du premier mode d'exploitation :

le chargement d'un élément de noyau parmi les éléments de noyau ($w_{11}$, $w_{12}$, ..., $w_{1c}$ ; $w_{21}$, $w_{22}$, ..., $w_{2c}$; $w_{31}$, $w_{32}$, ..., $w_{3c}$ ; $w_{41}$, $w_{42}$, ..., $w_{4c}$) présents dans le noyau ;
en réaction au fait que l'élément de noyau chargé est 0, l'omission de l'attribution d'un tampon temporaire ;
en réaction au fait que l'élément de noyau chargé n'est pas 0 :

l'attribution d'un tampon temporaire (T1 ; T2 ; T3 ; T4),
le chargement d'éléments d'entrée (705, 706) qui correspondent à l'élément de noyau chargé et le stockage, dans le tampon temporaire attribué, des éléments d'entrée chargés (705, 706),
la réalisation d'une multiplication scalaire matricielle entre l'élément de noyau chargé ($w_{11}$, $w_{12}$, ..., $w_{1c}$ ; $w_{21}$, $w_{22}$, . $w_{2c}$; $w_{31}$, $w_{32}$, ..., $w_{3c}$; $w_{41}$, $w_{42}$, ..., $w_{4c}$) et les éléments d'entrée stockés dans le tampon temporaire (T1 ; T2 ; T3 ; T4), et
l'actualisation d'éléments de sortie avec lesquels les résultats de la multiplication scalaire matricielle sont mis en correspondance par le biais d'une addition matricielle ;

- en réaction à la sélection du deuxième mode d'exploitation :

le chargement d'un élément d'entrée parmi des éléments d'entrée ($w_1$, ..., $w_9$) présents dans l'entrée (802) ;
en réaction au fait que l'élément d'entrée chargé est 0, l'omission de l'attribution d'un tampon temporaire ;

en réaction au fait que l'élément d'entrée chargé n'est pas 0 :

l'attribution d'un tampon temporaire,

le chargement d'éléments de noyau qui correspondent à l'élément d'entrée chargé et le stockage, dans le tampon temporaire attribué, des éléments de noyau chargés,

la réalisation d'une multiplication scalaire matricielle entre l'élément d'entrée chargé (B 809) et les éléments de noyau (810) stockés dans le tampon temporaire,

l'actualisation d'éléments de sortie ($H_A$, $W_A$ ; $H_A$, $W_A$ + 1, $H_A$ +1, $W_A$ ; $H_A$ +1, $W_A$ +1) avec lesquels les résultats de la multiplication scalaire matricielle sont mis en correspondance par le biais d'une addition matricielle.

2. Procédé mis en œuvre par ordinateur selon la revendication 1, dans lequel le RNN comprend une pluralité de couches de convolution (201, 202, 203), le procédé comprenant en outre :
la sélection du mode d'exploitation pour chacune des couches de convolution du premier mode d'exploitation et du deuxième mode d'exploitation par application de l'étape de sélection selon la revendication 1 à chaque couche.

3. Procédé mis en œuvre par ordinateur selon l'une quelconque des revendications précédentes, dans lequel le premier nombre de chargements de données est calculé compte tenu de la somme : $K \times K \times C \times D + W \times H \times (K \times K \times C \times D - Zk)$, dans laquelle

- la taille du noyau est $K \times K \times C \times D$, le noyau comportant D filtres, la taille de chaque filtre étant KxKxC;
- le nombre de zéros parmi les éléments de noyau est $Z_k$ ;
- la taille de l'entrée est $W \times H \times C$ ; et dans lequel le deuxième nombre de chargements de données est calculé compte tenu de la somme :

$$W \times H \times C + K \times K \times D \times (W \times H \times C - Zi),$$

dans laquelle:
- la taille de l'entrée est $W \times H \times C$ ;
- la taille du noyau est $K \times K \times C \times D$, le noyau comportant D filtres, la taille de chaque filtre étant KxKxC;

- le nombre de zéros parmi les éléments d'entrée est Zi.

4. Support d'enregistrement non transitoire lisible par ordinateur sur lequel sont stockées des instructions amenant du matériel informatique à réaliser le procédé selon l'une quelconque des revendications précédentes.

5. Dispositif de traitement d'un réseau de neurones convolutif (RNN), le dispositif comprenant :
un processeur conçu pour réaliser le procédé selon l'une quelconque des revendications 1 à 3.

**FIG. 1**

Start

101

Select, based on at least one of characteristic of kernel of convolution layer or characteristic of input of convolution layer, one operation mode from first operation mode reusing kernel and second operation mode reusing input

102

Perform convolution operation based on selected operation mode

End

**FIG. 2**

<u>200</u>

Input

Convolution layer 1 201

Sub-sampling layer

Convolution layer 2 202

Convolution layer 203

fully-connected layer

First operation mode or second operation mode?

First operation mode or second operation mode?

First operation mode or second operation mode?

classifier

EP 3 319 015 B1

# FIG. 3

**FIG. 4**

401

1    2    • • • •    D

Kernel 301

402

Input 208
:WxHxC

403

Output 209
:WxHxD

EP 3 319 015 B1

# FIG. 5

502

Kernel 301

501

503

Input 208
:WxHxC

Output 209
:WxHxD

EP 3 319 015 B1

19

FIG. 6

EP 3 319 015 B1

Characteristic of kernel

$K_z$

Characteristic of input

$I_z$

Convolution operation mode selecting module

$K_z > I_z \rightarrow$ First operation mode
$K_z < I_z \rightarrow$ Second operation mode

Convolution operation based on first operation mode

Convolution operation based on second operation mode

# FIG. 7A

Filter 701:2x2xC

Input 702:3x3xC

Padded input 703:5x5xC

705

706

T1

T2

T3

T4

Temporary buffer 704:4x4xCx4

FIG. 7B

**FIG. 7C**

Kernel 721:D filters

C
K
K

Input 722
:WxHxC

Padded input 723

T1
T2
T3
T4

Temporary buffer 724

Output 725
:W'xH'xD

# FIG. 8A

Kernel 801

Input 802

Left top    First row    Right top

First column    Center    Last column

Left bottom    Last row    Right bottom

803
<First information>

EP 3 319 015 B1

# FIG. 8B

801 / Padded input 812

W

A B
C D → Sliding

Sliding

H

Input

802

806
[A] ⊗

807
| $W_1$ | $W_2$ | $W_3$ |
| $W_4$ | $W_5$ | $W_6$ |
| $W_7$ | $W_8$ | $W_9$ |

809
[B] ⊗

810
| $W_1$ | $W_2$ | $W_3$ |
| $W_4$ | $W_5$ | $W_6$ |
| $W_7$ | $W_8$ | $W_9$ |

804
<Second information>

808
| Index of output element | Value of output element |
| --- | --- |
| $(H_A, W_A)$ | $+= A \times W_5$ |
| $(H_A, W_A+1)$ | $+= A \times W_4$ |
| $(H_A+1, W_A)$ | $+= A \times W_2$ |
| $(H_A+1, W_A+1)$ | $+= A \times W_1$ |

811
| Index of output element | Value of output element |
| --- | --- |
| $(H_B, W_B-1)$ | $+= B \times W_6$ |
| $(H_B, W_B)$ | $+= B \times W_5$ |
| $(H_B, W_B+1)$ | $+= B \times W_4$ |
| $(H_B+1, W_B-1)$ | $+= B \times W_3$ |
| $(H_B+1, W_B)$ | $+= B \times W_2$ |
| $(H_B+1, W_B+1)$ | $+= B \times W_1$ |

| (0,0) | (0,1) |
| (1,0) | (1,1) |

(H,W)

Output 805

EP 3 319 015 B1

EP 3 319 015 B1

**FIG. 9**

901

| 902 | | 903 |
|---|---|---|
| Processor | ← → | Memory |

26